(19) Europäisches Patentamt
European Patent Office
Office européen des brevets

(11) Veröffentlichungsnummer : **0 101 667**
**B1**

(12) **EUROPÄISCHE PATENTSCHRIFT**

(45) Veröffentlichungstag der Patentschrift : **30.11.88**

(51) Int. Cl.⁴ : **C 08 K 3/04**, C 08 K 5/00

(21) Anmeldenummer : **83810361.2**

(22) Anmeldetag : **15.08.83**

(54) **Neue Stoffzusammensetzungen mit Graphit.**

(30) Priorität : **20.08.82 CH 4980/82**

(43) Veröffentlichungstag der Anmeldung : **29.02.84 Patentblatt 84/09**

(45) Bekanntmachung des Hinweises auf die Patenterteilung : **30.11.88 Patentblatt 88/48**

(84) Benannte Vertragsstaaten : **BE CH DE FR GB IT LI NL**

(56) Entgegenhaltungen :
**US-A- 2 875 076**
**"Encyclopedia of Polymer Science and Technology", Band 10, 1969, John Wiley & Sons, Seiten 193-209;**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Bäbler, Fridolin, Dr.**
**Route du Couchant 12**
**CH-1723 Marly (CH)**
Erfinder : **Weissmüller, Adolf**
**Vogesenstrasse 32**
**CH-7842 Kandern (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 101 667 B1

**Beschreibung**

Es wurde gefunden, dass man bei der Färbung von Kunststoffen mit einem Pigment oder Farbstoff durch Zugabe einer bestimmten Menge Graphit homogene, gleichmässig schimmernde und neuartige Farbnuancen mit ausgezeichneten Echtheiten erzielen kann. Die Zugabe von Graphit ist sehr wirtschaftlich, toxikologisch unproblematisch, und beeinträchtigt weder die Hitze- noch die Licht- und Wetterechtheiten der Stoffzusammensetzung. Graphit ist in Kunststoffsubstanzen sehr leicht verteilbar und wirkt auf diese auch in keiner Weise zersetzend.

Die Erfindung betrifft somit eine Stoffzusammensetzung, enthaltend zu Formteilen verarbeitbares hochmolekulares organisches Material, 0,001 bis 3,0 Gew.-% Graphit bezogen auf das hochmolekulare organische Material und ein oder mehrere Pigmente oder polymerlösliche Farbstoffe.

Unter Formteilen versteht man insbesondere unter orientierender Beanspruchung erhältliche Formteile, wie Spritzlinge, Giesslinge, Presslinge, Bänder, Fasern und Walzfolien. Zu Formteilen verarbeitbare hochmolekulare organische Materialien können insbesondere Thermoplaste, Duroplaste oder Elastomere sein, wie beispielsweise Zelluloseäther, Zelluloseester, wie Aethylzellulose, Polyamide, Polyäther, lineare oder vernetzte Polyurethane, lineare, vernetzte oder ungesättigte Polyester, Polycarbonate, Polyolefine, wie Polyäthylen, Polypropylen, Polybutylen, Polystyrol, Poly-p-Xylylen, Poly-4-methylpenten-1, Polysulfone, Polyzyklamide, Polyphenylenoxide, Ionomere, Phenoxyharze, ferner Polyvinylhalogenide, wie Polyvinylchlorid, Polyvinylidenchlorid- oder -fluorid, Polytetrafluoräthylen, Polyimide, Polyacrylnitril, Acrylpolymerisate, Polyacrylsäureester, Gummi, Silikonpolymere, Phenolformaldehydharze, Melaminformaldehydharze, Harnstofformaldehydharze, Epoxydharze, Styrol-Butadien-Kautschuk, Acrylnitril-Butadien-Kautschuk, Chloropren-Kautschuk, einzeln oder in Mischungen.

Bevorzugt enthalten die erfindungsgemässen Stoffzusammensetzungen thermoplastisches hochmolekulares organisches Material, insbesondere Polyvinylchlorid, Polyäthylen, Polypropylen, Polystyrol, Polycarbonat, Polyacrylsäureester, Polyamid, lineare Polyester, Polyäther, lineares Polyurethan oder deren Copolymere.

Enthält die erfindungsgemässe Stoffzusammensetzung einen polymerlöslichen Farbstoff, so verwendet man als hochmolekulares organisches Material insbesondere einen transparenten Thermoplasten, wie beispielsweise Polystyrol, Polymethylmethacrylat oder Polycarbonat.

Für die erfindungsgemässe Stoffzusammensetzung eignen sich als Graphite sowohl Natur- wie Kunstgraphite. Bei Naturgraphiten kann der Kohlenstoffanteil stark variieren. Man bevorzugt jedoch jene Naturgraphite, deren Kohlenstoffgehalt mindestens 70 % beträgt. Die im Naturgraphit vorhandenen Verunreinigungen, wie Kieselsäure, Tonerde oder Eisenoxide können nur soweit toleriert werden, als sie die Beständigkeit des zu färbenden Substrates oder die Echtheiten des anderen Pigmentes oder Farbstoffes nicht ungünstig beeinflussen. In der Regel bevorzugt man Graphite mit einem hohen Kohlenstoffgehalt, insbesondere von mindestens 99 %. Im allgemeinen sind daher Kunstgraphite bevorzugt.

Bezüglich Teilchenbeschaffenheit des Graphits bevorzugt man kristallines Graphit mit einem Teilchendurchmesser von insbesondere weniger als 100 µm. Besonders bevorzugt verwendet man einen Graphit, der in Schuppen- oder Plättchenform mit einem Durchmesser von bis zu 20 µm und einer Dicke von bis zu 4 µm vorliegt.

Die optimalen optischen Effekte lassen sich durch Variation der Graphitmenge innerhalb des angegebenen Bereiches festlegen. Bevorzugt verwendet man 0,01 bis 1,0 Gew.% Graphit bezogen auf das hochmolekulare organische Material in der erfindungsgemässen Stoffzusammensetzung. Insbesondere bei Graphitteilchen mit weniger als 5 µm Durchmesser genügen in der Regel bereits weniger als 0,5 Gew.-% Graphit.

Als Pigmente, die neben dem Graphit eingesetzt werden, kommen transparente oder deckende anorganische und/oder organische Verbindungen in Frage. Beispiele von anorganischen Pigmenten sind Metalloxide, wie Titandioxid, Eisenoxid, Antimongelb, Bleichromate, Molybdatrot, Ultramarinblau, Kobaltblau, Manganblau, Chromoxidgrün, Chromoxidhydratgrün, Kobaltgrün, ferner Metallsulfide, wie Cadmiumsulfid, Zinksulfid, Arsendisulfid, Quecksilbersulfid, Antimontrisulfid, Cadmiumsulfoselenide, Metallpulver, wie Zink- oder Aluminiumpulver.

Beispiele von organischen Pigmenten sind Azo-, Azomethin-, Methin-, Anthrachinon-, Phthalocyanin-, Perinon-, Perylen, Dioxazin-, Thioindigo-, Iminoisoindolin-, Iminoisoindolinon-, Chinacridon- oder Chinophthalonpigmente, ferner Metallkomplexe von z. B. Azo-, Azomethin- oder Methinfarbstoffen.

Als polymerlösliche Farbstoffe eignen sich beispielsweise insbesondere Dispersionsfarbstoffe, vorzugsweise solche der Anthrachinonreihe, beispielsweise Hydroxy-, Amino-, Alkylamino-, Cyclohexylamino-, Arylamino-, Hydroxyamino- oder Phenylmercaptoanthrachinone, sowie Metallkomplexe von Azofarbstoffen, insbesondere 1 : 2-Chrom- oder Kobaltkomplexe von Monoazofarbstoffen, ferner Fluoreszenzfarbstoffe, wie solche aus der Cumarin-, Naphthalimid-, Pyrazolin-, Acridin-, Xanthen-, Thioxanthen-, Oxazin-, Thiazin- oder Benzthiazolreihe.

Bevorzugt enthalten die erfindungsgemässen Zusammensetzungen neben dem Graphit ein oder mehrere organische Pigmente oder einen oder mehrere Farbstoffe, insbesondere jedoch nur ein organisches Pigment oder nur einen Farbstoff. Besonders bevorzugt enthalten die erfindungsgemässen Zusammensetzungen neben dem Graphit ein organisches Pigment, vor allem ein transparentes organisches Pigment.

In der erfindungsgemässen Zusammensetzung liegen die neben dem Graphit vorhandenen Pigmente oder Farbstoffe bevorzugt in Mengen von 0,001 bis 10 Gew.-%, insbesondere 0,01 bis 3 Gew.-%, bezogen auf das hochmolekulare organische Material vor.

Graphit in der bevorzugten Teilchenbeschaffenheit ausgehend von grobkristallinem Graphit lässt sich auf bekannte Art erhalten, wie beispielsweise durch Mahlen in Luftstrahl-, Sand- oder Kugelmühlen. Man zerkleinert den Graphit jedoch bevorzugt unter solchen Bedingungen, in welchen die anisotropen Eigenschaften des Graphits in Bezug auf die Abspaltbarkeit von Schichtebenen zur Geltung kommen. So erhält man ausgeprägt flächige, plättchen- oder schuppenförmige Graphitteilchen beispielsweise durch Nassmahlung von grobkristallinem Graphit in einer Mahlvorrichtung, die Metall-, Glas- oder Porzellankugeln, Kunststoffgranulat oder Sandkörner als Mahlkörper enthält. Diese Mahlkörper werden dabei beispielsweise durch Rotation des Gefässes, oder durch Schwingungserzeuger oder Rührer in Bewegung gesetzt.

Es kann von Vorteil sein, Pigment, Farbstoff und/oder Graphit vor der Verwendung für die erfindungsgemässe Stoffzusammensetzung mit einem Texturschutzmittel zu behandeln. Bevorzugt verwendet man einen Graphit, der mit einem Texturschutzmittel behandelt wurde, beispielsweise vor, während oder nach der Zerkleinerung. Dabei verwendet man bevorzugt 0,02 bis 25 Gew.-% Texturschutzmittel bezogen auf die eingesetzte Graphitmenge.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quartäre Ammoniumverbindungen, wie Tri-($C_1$-$C_4$)-alkylbenzylammoniumsalze, ferner Weichmacher, wie epoxidiertes Sojabohnenöl, Wachse, wie Polyäthylenwachs, Harzsäuren, wie Abietinsäure, Kolophoniumseife, hydriertes oder dimerisiertes Kolophonium, $C_{12}$-$C_{18}$-Paraffindisulfonsäuren, Alkylphenole, Alkohole, Diole oder Polyole mit mindestens 8 C-Atomen.

Die erfindungsgemässe Stoffzusammensetzung enthält bevorzugt einen mit Stearinsäure, Stearylamin, hydrierter Abietinsäure, epoxidiertem Sojabohnenöl oder einem 1,2-Diol, insbesondere mit Octandiol-(1,2) oder Dodecandiol-(1,2) behandelten Graphit.

Die erfindungsgemässen Stoffzusammensetzungen können nach bekannten Methoden hergestellt werden. Graphit und Pigment bzw. Farbstoff können einzeln oder vorgemischt als Toner bzw. als Lösung oder Dispersion oder in Form von Präparaten zum hochmolekularen organischen Material zugegeben werden. Dabei kann man je nach Verwendungszweck der erfindungsgemässen Stoffzusammensetzung noch weitere Stoffe zufügen, wie beispielsweise Lichtschutzmittel, Hitzestabilisatoren, Weichmacher, Bindemittel oder Füllstoffe.

Mit den feinkristallinen schuppen- bzw. plättchenförmigen Graphitpartikeln in der erfindungsgemässen Stoffzusammensetzung erzielt man einen gleichmässig schimmernden Glanz, wie er für Seidengewebe charakteristisch ist. Der Seidenglanz ist besonders ausgeprägt, wenn die erfindungsgemässe Stoffzusammensetzung von direktem Licht aus einer künstlichen Lichtquelle oder von der Sonne beschienen wird. Wegen ihres stark ausgeprägten diffusen Streulichtanteils können die erfindungsgemäss erzielten Glanzeffekte von auf andere Art erzielten deutlich unterschieden werden. Die Glanzeffekte können beispielsweise mit einem Goniophotometer gemessen werden.

Die Verwendung von Graphit für die erfindungsgemässe Stoffzusammensetzung ist wirtschaftlich. Die Hitze-, Licht- und Wetterechtheit von Graphit selbst wie von der erfindungsgemässen Stoffzusammensetzung sind ausgezeichnet, Graphit lässt sich zudem sehr gut in das organische Material einarbeiten. Bei der Extrusion beispielsweise ergibt sich eine geringe Abnützung der Apparaturen und geringe Bremswirkung. In Weichmacherpasten und Plastisolen setzt sich der Graphit aufgrund seiner idealen Dichte auch nach längerem Stehenlassen nicht ab. Vor allem erhält man gleichmässige Färbungen.

Die erfindungsgemässen Stoffzusammensetzungen eignen sich zur Herstellung von Formteilen, wie beispielsweise von gespritzten, gewalzten oder gepressten Kunststoffartikeln für z. B. die Haushalt-, Bau-, Auto- oder Flugzeugindustrie.

In den folgenden Beispielen bedeuten Teile, sofern nicht anderes angegeben, Gewichtsteile.

## Beispiel 1

a) In einer 500 Vol.-Teile fassenden Glasperlmühle werden 13,5 Teile synthetischer LONZA-Graphit T-44® mit einer mittleren Teilchengrösse von kleiner als 44 µm und 1,5 Teile Octandiol-(1,2) in 125 Teilen Wasser verrührt. Man gibt 400 Vol.-Teile Glaskugeln mit einem Durchmesser von 3,5-4,0 mm zur Suspension und mahlt die Mischung während 9 Stunden ohne Aussenkühlung bei einer Rührgeschwindigkeit von 320 U/Min. Die Graphitsuspension wird von den Glaskugeln abgetrennt, welche mit Wasser etwas nachgewaschen werden, dann abfiltriert. Man wäscht den Presskuchen mit Wasser und trocknet ihn bei 70-80 °C im Vakuumtrockenschrank. Man erhält 14,0 Teile eines grauen, Octandiol-(1,2) als Texturschutzmittel enthaltenden Graphites, welcher nach dem Pulverisieren dank einwandfreier Dispergierbarkeit in Kunststoffmassen leicht einarbeitbar ist. Rasterelektronenmikroskopische Aufnahmen des so konditionierten Graphitpulvers zeigen Partikel mit einem ausgeprägten schuppen- bis plättchenförmigen Aussehen.

b) 63,0 Teile Polyvinylchlorid LONZAVYL E 722® (LONZA AG), 3,0 Teile REOPLAST 39® (CIBA-GEIGY AG), 1,5 Teile IRGASTAB BC-26®, 0,5 Teile IRGASTAB CH-300® (beide CIBA-GEIGY AG), 32,0 Teile Dioctylphthalat, 0,25 Teile des nach Beispiel 1a) behandelten Graphits und 0,25 Teile C.I. Pigment Blau 15 : 3, Nr. 74160, werden zusammen in einem Becherglas von Hand mit einem Rührstab gut vermischt. Die Mischung wird dann auf einem Zweiwalzenlabormischwalzwerk bei einer Temperatur von 160 °C, einer Umdrehzahl von 25 U/Minute und einer Friktion von 1 : 1,2 während 8 Minuten durch ständiges Umlegen, Abnehmen und Aufgeben zu einer Weich-PVC-Folie mit einer Schichtdicke von ca. 0,4 mm ausgewalzt. Die so erhaltene Weich-PVC-Folie weist eine farbstarke, gleichmässig seidigglänzende blaue Färbung mit ausgezeichneten Hitze-, Licht- und Migrationsechtheiten auf.

c) Messung des Glanzeffektes mit einem Goniophotometer TYP GP2 der Firma ZEISS :

Beleuchtungswinkel : 60°
Beleuchtungsapertur : 1°
Skalenempfindlichkeit : 0,25 µA
Messfehler : ± 0,3 µA
Foliendicke : 0,4 mm, Messung der hochglänzenden Oberfläche in der Längsrichtung.

Messresultate

| Messwinkel | Messapertur | Folie nach Beispiel 1b [µA] |
|---|---|---|
| 63° | 2° | 7,2 |
| 64° | 2° | 4,4 |
| 65° | 2° | 3,1 |

Beispiel 2

a) Verfährt man auf analoge Art wie in Beispiel 1b beschrieben, verwendet aber anstelle von C.I. Pigment Blau 15 : 3, Nr 74160, C.I. Pigment Rot 221, so erhält man eine farbstarke, gesättigte, gleichmässig seidigglänzende rotviolette Folie mit ebenso guten Eigenschaften.

b) Misst man die Glanzeffekte wie in Beispiel 1c beschrieben, erhält man die folgenden Messwerte :

| Messwinkel | Messapertur | Folie nach Beispiel 2a [µA] |
|---|---|---|
| 63° | 2° | 6,8 |
| 64° | 2° | 4,5 |
| 65° | 2° | 3,1 |

Beispiel 3

a) Verfährt man auf analoge Art wie in Beispiel 1b beschrieben, verwendet aber anstelle von C.I. Pigment Blau 15 : 3, C.I. Pigment Gelb 128, so erhält man eine deckende, gleichmässig seidigglänzende grüngefärbte Folie, welche sehr gute Hitze-, Licht- und Wetterechtheiten aufweist.

b) Misst man die Glanzeffekte wie in Beispiel 1c beschrieben, erhält man die folgenden Messresultate :

(Siehe Tabelle Seite 5 f.)

| Messwinkel | Messapertur | Folien nach Beispiel 3a [ µA] |
|---|---|---|
| 63° | 2° | 7,8 |
| 64° | 2° | 5,4 |
| 65° | 2° | 4,2 |

Beispiel 4

Verfährt man auf analoge Art wie in Beispiel 1b beschrieben, verwendet aber anstelle von C.I. Pigment Blau 15 : 3 das Isoindolinonpigment C.I. Pigment Gelb 110, so erhält man eine Weich-PVC-Folie mit grünlicher, gleichmässig seidigglänzender, dunkler Färbung mit ausgezeichneten Licht-, Hitze-, Wetter- und Migrationsechtheiten.

Beispiel 5

a) Verfährt man auf analoge Art wie in Beispiel 1a beschrieben, verwendet aber anstelle von 1,5 Teilen Octandiol-(1,2) 0,5 Teile Stearinsäure, so erhält man 13 Teile eines behandelten LONZA-Graphits mit ähnlich guten Eigenschaften.

b) Verfährt man auf analoge Art wie in Beispiel 1b beschrieben, verwendet aber anstelle von C.I. Pigment Blau 15 : 3 das Dioxazinpigment C.I. Pigment Violett 37 und statt nach Beispiel 1a nach Beispiel 5a behandelten Graphit, so erhält man eine Weich-PVC-Folie mit einer gleichmässig seidigglänzigen, violetten Nuance.

Beispiel 6

Verfährt man auf analoge Art wie in Beispiel 5b beschrieben, verwendet aber anstelle von C.I. Pigment Blau 15:3 das α-Cu-Phthalocyaninpigment C.I. Pigment Blau 15, so erhält man eine gleichmässig seidigglänzende, blaue Färbung mit ausgezeichneter Hitze-, Licht- und Migrationsechtheit.

Beispiel 7

Verfährt man auf analoge Art wie in Beispiel 5b beschrieben, verwendet aber anstelle von C.I. Pigment Blau 15 : 3 chloriertes Cu-Phthalocyaninpigment C.I. Pigment Grün 7, so erhält man eine Weich-PVC-Folie, welche eine gleichmässig farbstarke, seidigglänzige, dunkelgrüne Nuance aufweist. Die Hitze-, Licht und Migrationsechtheiten dieser Färbung sind hervorragend.

Beispiel 8

Verfährt man auf analoge Art wie in Beispiel 5b beschrieben, verwendet aber anstelle von 0,25 Teilen C.I. Pigment Blau 15 : 3 0,5 Teile des deckenden anorganischen Pigmentes Cadmopur Gelb GS® (Firma BAYER), so erhält man eine Weich-PVC-Folie mit einer gleichmässig seidigglänzenden, dunkelgrünen Färbung hoher Stättigung.

Beispiel 9

a) Verfährt man auf analoge Art wie in Beispiel 1a beschrieben, verwendet aber anstelle von Octandiol-(1,2) feinteilige hydrierte Abietinsäure, so erhält man einen behandelten LONZA-Graphit mit ähnlich guten Eigenschaften.

b) Verfährt man auf analoge Art wie in Beispiel 1b beschrieben, verwendet aber anstelle von 0,25 Teilen C.I. Pigment Blau 15 : 3 1,0 Teile des gelben Diazokondensationspigmentes C.I. Pigment Gelb 94 und statt nach Beispiel 1a nach Beispiel 9a behandelten LONZA-Graphit, so erhält man eine Weich-PVC-Folie, welche eine grüne, gleichmässig seidigglänzende, farbstarke Färbung mit ausgezeichneten Hitze-, Licht- und Migrationsechtheiten aufweist.

Beispiel 10

Verfährt man auf analoge Art wie in Beispiel 9b beschrieben, verwendet aber anstelle von 0,25 Teilen 0,1 Teile des behandelten LONZA-Graphits und anstelle von 0,25 Teilen C.I. Pigment Blau 15 : 3 0,1 Teile des anthrachinoiden Pigmentes C.I. Pigment Rot 177, so erhält man eine farbstarke, gleichmässig seidigglänzende, rotviolette Weich-PVC-Folie, welche ausgezeichnete Hitze-, Licht- und Migrationsechtheiten aufweist.

Beispiel 11

Verfährt man auf analoge Art wie in Beispiel 9b beschrieben, verwendet aber anstelle von 0,25 Teilen 0,5 Teile des behandelten LONZA-Graphits und anstelle von 0,25 Teilen C.I. Pigment Blau 15 : 3 1,0 Teile des anthrachinoiden Pigmentes C.I. Pigment Rot 177, so erhält man eine Weich-PVC-Folie mit einer seidigglänzenden, farbstarken, violetten Nuance.

Beispiel 12

Verfährt man auf analoge Art wie in Beispiel 9b beschrieben, verwendet aber anstelle von 0,25 Teilen 0,1 Teile behandelten LONZA-Graphit und anstelle von 0,25 Teilen C.I. Pigment Blau 15 : 3 0,25 Teile des indigoiden Pigmentes C.I. Pigment Rot 88, so erhält man eine Weich-PVC-Folie mit einer gleichmässig seidigglänzenden, violetten Nuance.

Beispiel 13

Verfährt man auf analoge Art wie in Beispiel 9b beschrieben, verwendet aber anstelle von 0,25 Teilen 0,2 Teile des behandelten LONZA-Graphits und anstelle von 0,25 Teilen C.I. Pigment Blau 15 : 3 0,2 Teile des roten Perylentetracarbonsäurediimidpigmentes C.I. Pigment Rot 149, so erhält man eine gleichmässig seidigglänzende, braunrote Weich-PVC-Folie, welche ausgezeichnete Hitze-, Licht- und Migrationsechtheiten aufweist.

Beispiel 14

Eine Mischung von

| | | |
|---|---|---|
| 92,0 | Teilen Vinylharz Vinnol H65D® | (Wacker, München) |
| 8,0 | Teilen Vinylcopolymerisat Vestolit HIS 7587® | (HUELS) |
| 1,5 | Teilen Weichmacher Reoplast 39® | (CIBA-GEIGY AG) |
| 1,4 | Teilen Stabilisator IRGASTAB BC-10® | (CIBA-GEIGY AG) |
| 1,4 | Teilen Stabilisator IRGASTAB BC-29® | (CIBA-GEIGY AG) |
| 0,7 | Teilen Hilfsstabilisator IRGASTAB CH-300® | (CIBA-GEIGY AG) |
| 0,4 | Teilen Gleitmittel IRGAWAX 370® | (CIBA-GEIGY AG) |
| 0,2 | Teilen Gleitmittel IRGAWAX 360® | (CIBA-GEIGY AG) |
| 0,25 | Teilen Lichtschutzmittel TINUVIN 320® | (CIBA-GEIGY AG) |

wird in einem Fluidmischer (Firma Papenmeier K.G., Detmold) durch Verrühren innert ca. 5 Minuten bei einer Geschwindigkeit von 1 400 U/Min. hergestellt.

1,5 Teile der so hergestellten Hart-PVC-Mischung, 0,05 Teile eines gut dispergierbaren Perylentetracarbonsäure-dianhydridpigmentes und 0,025 Teile des nach Beispiel 9a behandelten LONZA-Graphits werden in einem Henschelmischer (Henschelwerke G.M.B.H., Kassel) bei einer Geschwindigkeit von ca. 2 000 U/Min. bei Raumtemperatur während ca. 3 Min. vermischt. Auf einem Mischwalzwerk wird die so pigmentierte Hart-PVC-Mischung bei 190 °C während 6 Minuten mit 25 U/Min. und einer Friktion von 1 : 1,2, gewalzt und bei 190 °C während 6 Minuten auf einer Bürkle-Presse zwischen verchromten Stahlplatten zu einer Schichtdicke von ca. 1 mm verpresst. Man erhält einen gleichmässig seidigglänzenden, braunrotgefärbten Pressling, der hervorragende Licht- und Wetterechtheiten aufweist.

Beispiel 15

a) Verfährt man auf analoge Art wie in Beispiel 5a beschrieben, verwendet aber anstelle von Stearinsäure Stearylamin, so erhält man einen behandelten LONZA-Graphit mit ähnlich guten Eigenschaften.

b) Verfährt man auf analoge Art wie in Beispiel 1b beschrieben, verwendet aber statt 0,25 Teilen nach Beispiel 1a 0,2 Teile nach Beispiel 15a behandelten LONZA-Graphit und anstelle von 0,25 Teilen C.I. Pigment Blau 15 : 3 das anorganische Pigment Moly Orange AA3® (Firma CIBA-GEIGY AG), so erhält man eine Weich-PVC-Folie, welche eine gleichmässig seidigglänzende, braunrote Färbung aufweist.

Beispiel 16

Verfährt man auf analoge Art wie in Beispiel 15b beschrieben, verwendet aber anstelle von 0,25 Teilen 0,2 Teile des behandelten LONZA-Graphits und anstelle von 0,25 Teilen C.I. Pigment Blau 15 : 3 1,0 Teile des anorganischen Eisenoxidpigmentes Bayferrox 3910® (Firma BAYER), so erhält man eine seidigglänzende, graugrüne Weich-PVC-Folie.

Beispiel 17

Verfährt man auf analoge Weise wie in Beispiel 15b beschrieben, verwendet aber anstelle von 0,25 Teilen 0,2 Teile des behandelten LONZA-Graphits und anstelle von 0,25 Teilen C.I. Pigment Blau 15 : 3 0,5 Teile des orangen Perinonpigmentes C.I. Pigment Orange 43, so erhält man eine gleichmässig seidigglänzende, braungefärbte Weich-PVC-Folie mit ausgezeichneten Hitze-, Licht- und Migrationsechtheiten.

Beispiel 18

Verfährt man auf analoge Art wie in Beispiel 15b beschrieben, verwendet aber anstelle von 0,25 Teilen 0,2 Teile des behandelten Graphits und anstelle von 0,25 Teilen C.I. Pigment Blau 15 : 3 0,5 Teile $\gamma$-Chinacridonpigment C.I. Pigment Violett 19, so erhält man eine Weich-PVC-Folie mit einer gleichmässig seidigglänzenden, violetten Nuance mit ausgezeichneten Echtheiten.

Beispiel 19

Verfährt man auf analoge Art wie in Beispiel 18 beschrieben, verwendet aber anstelle von C.I. Pigment Violett 19 das Dichlorchinacridonpigment C.I. Pigment Rot 209, so erhält man eine Weich-PVC-Folie mit einer gleichmässig seidigglänzenden, violetten Nuance mit ausgezeichneten Echtheiten.

Beispiel 20

Verfährt man auf analoge Art wie in Beispiel 18 beschrieben, verwendet aber anstelle von C.I. Pigment Violett 19 das Disazokondensationspigment C.I. Pigment Rot 166, so erhält man eine Weich-PVC-Folie mit gleichmässig seidigglänzender, deckender, brauner Färbung.

Beispiel 21

Verfährt man auf analoge Art wie in Beispiel 20 beschrieben, verwendet aber anstelle von 0,5 Teilen 1,0 Teile C.I. Pigment Rot 166, so erhält man eine Weich-PVC-Folie mit sehr deckender, gleichmässig seidigglänzender, braunroter Färbung mit ausgezeichneten Echtheiten.

Beispiel 22

Verfährt man auf analoge Art wie in Beispiel 21 beschrieben, verwendet aber anstelle von C.I. Pigment Rot 166 das gelbe Chinophtalonpigment C.I. Pigment Gelb 138, so erhält man eine Weich-PVC-Folie mit gleichmässig seidigglänzender, sehr deckender, grüner Färbung mit ausgezeichneten Echtheiten.

Beispiel 23

Verfährt man auf analoge Art wie in Beispiel 21 beschrieben, verwendet aber anstelle von C.I. Pigment Rot 166 den roten 2B-Toner C.I. Pigment Rot 48 : 4, Nr. 15865 : 4, so erhält man eine Weich-PVC-Folie mit einer dunkelroten, seidigglänzenden stark deckenden Nuance.

Beispiel 24

Verfährt man auf analoge Art wie in Beispiel 21 beschrieben, verwendet aber anstelle von C.I.

Pigment Rot 166, das gelbe Diarylidpigment C.I. Pigment Gelb 13, Nr. 21100, so erhält man eine Weich-PVC-Folie mit seidigglänzender, stark deckender, grüner Färbung.

Beispiel 25

Verfährt man auf analoge Art wie in Beispiel 3 beschrieben, verwendet aber anstelle des Octandiol-(1,2)-enthaltenden behandelten LONZA-Graphits 100 %igen LONZA-Graphit vom Typ KS 2.5®, so erhält man eine grünlich gefärbte Weich-PVC-Folie mit ähnlichen Eigenschaften.

Beispiel 26

Verfährt man auf analoge Art wie in Beispiel 25 beschrieben, verwendet aber anstelle von 0,25 Teilen LONZA-Graphit KS 2.5® 0,5 Teile LONZA-Graphit T-10®, so erhält man eine grünlich gefärbte Weich-PVC-Folie mit ähnlichen Eigenschaften.

Beispiel 27

Verfährt man auf analoge Art wie in Beispiel 26 beschrieben, verwendet aber anstelle von LONZA-Graphit T-10® den Naturgraphit Silberpudergraphit GHL 1701® (Firma Georg H. Luh), so erhält man eine grüngefärbte Weich-PVC-Folie mit ähnlichen Eigenschaften.

Beispiel 28

a) Verfährt man auf analoge Art wie in Beispiel 1a beschrieben, verwendet jedoch anstelle von 1,5 Teilen Octandiol-(1,2) 0,9 Teile REOPLAST 39® (CIBA-GEIGY AG), so erhält man einen behandelten LONZA-Graphit mit ähnlich guten Eigenschaften.

b) Eine Mischung von 0,5 Teilen des nach Beispiel 28a behandelten LONZA-Graphits, 0,5 Teilen Isoindolinonpigment C.I. Pigment Gelb 110, 1,0 Teil Antioxydans IRGANOX 1010® (CIBA-GEIGY AG) und 1 000 Teilen Polyäthylen-HD-Granulat VESTOLEN A6016® (Firma Hüls) wird während 15 Minuten in einer Glasflasche auf einer Rollbank vorgemischt. Danach wird die Mischung in zwei Passagen auf einem Einwellenextruder extrudiert, das so erhaltene Granulat auf der Spritzgussmaschine (Allround Aarburg 200) bei 220 °C zu Platten verspritzt und während 5 Minuten bei 180 °C nachgepresst. Die Pressplatten weisen eine seidigglänzende, dunkelgrüne Färbung mit ausgezeichneten Echtheiten auf.

Beispiel 29

Verfährt man auf analoge Art wie in Beispiel 28b beschrieben, verwendet aber anstelle von C.I. Pigment Gelb 110 das anthrachinoide Pigment C.I. Pigment Rot 177, so erhält man Pressplatten mit seidigglänzender, violetter Nuance und ebensoguten Echtheiten.

Beispiel 30

Verfährt man auf die analoge Art wie in Beispiel 28b beschrieben, verwendet aber anstelle von 1 000 Teilen VESTOLEN A6016® 1 000 Teile Polystyrolgranulat Polystyrol 165 H® (Firma BASF) und anstelle von 0,5 Teilen 0,25 Teilen Graphit, sowie anstelle von C.I. Pigment Gelb 110 Kupferphthalocyanin-tetrasulfonsäure-(3-methoxy-propyl)-amid, so erhält man Presslinge mit einer seidigglänzenden, dunkelblauen Nuance mit ausgezeichneten Echtheiten.

Beispiel 31

Eine Mischung von 0,25 Teilen des nach Beispiel 28a behandelten LONZA-Graphits, 0,5 Teilen Kupferphthalocyanintetrasulfonsäure-(3-methoxypropyl)-amid, 1,0 Teil Antioxydans IRGANOX 1010® (CIBA-GEIGY AG), und 1 000 Teilen Polycarbonat MACROLON 3000W® (BAYER) wird während 15 Minuten in einer Gasflasche auf einer Rollbank vorgemischt. Danach wird die Mischung auf einem Einwellenextruder in einer Passage extrudiert und granuliert. Das so erhaltene Granulat wird auf der Spritzgussmaschine bei einer Verweilzeit von 5 Minuten bei 290 °C zu, 1,5 mm dicken Pressplatten verspritzt. Die Pressplatten weisen eine seidigglänzende, blaue Nuance mit ausgezeichneten Echtheiten auf.

Beispiel 32

Verwendet man anstelle von Kupferphthalocyanin-tetrasulfonsäure-(3-methoxypropyl)-amid das Isoindolinonpigment C.I. Pigment Gelb 110, verfährt sonst nach der in Beispiel 31 beschriebenen Art, so erhält man Pressplatten mit einer seidigglänzenden dunkelgrünen Nuance mit ausgezeichneten Echtheiten.

Beispiel 33

Verwendet man anstelle von Kupferphthalocyanintetrasulfonsäure-(3-methoxypropyl)-amid das anthrachinoide Pigment C.I. Pigment Rot 177, sowie anstelle von 0,25 Teilen 0,5 Teile Graphit, verfährt sonst nach der in Beispiel 31 beschriebenen Art, so erhält man Presslinge mit einer seidigglänzenden, braunschwarzen Nuance mit ausgezeichneten Echtheiten.

Beispiel 34

Verwendet man anstelle von MACROLON 3000W® Polyamid-granulat VESTAMID® (Firma Hüls), verfährt sonst nach der in Beispiel 31 beschriebenen Art, so erhält man gefärbte Polyamidpresslinge mit ähnlich guten Eigenschaften.

Beispiel 35

Verwendet man anstelle von VESTOLEN A6016® Polypropylengranulat MOPLEN S50G® (Firma Montedison), verfährt sonst nach der in Beispiel 28b beschriebenen Art, so erhält man gefärbte Polypropylenpresslinge mit ähnlich guten Eigenschaften.

Beispiel 36

Eine Mischung von 0,25 Teilen des nach Beispiel 28a behandelten LONZA-Graphits, 0,5 Teilen C.I. Solvent Orange 60, 1,0 Teil Antioxydans IRGANOX 1010® und 1 000 Teilen Polycarbonatgranulat, MACROLON 3000W® (Firma BAYER) wird während 15 Minuten in einer Glasflasche auf einer Rollbank vorgemischt. Danach wird die Mischung in einer Passage auf einem Einwellenextruder extrudiert und granuliert. Das so erhaltene gefärbte Granulat wird auf einer Spritzgussmaschine bei einer Verweilzeit von 5 Minuten bei 290 °C zu 1,5 mm dicken Pressplatten verspritzt. Die Pressplatten weisen eine seidigglänzende braune Nuance mit ausgezeichneten Echtheiten auf.

Beispiel 37

Verwendet man anstelle von C.I. Solvent Orange 60 den Chinophthalonfarbstoff C.I. Dispersions-Gelb 54, verfährt sonst nach der in Beispiel 36 beschriebenen Art, so erhält man Pressplatten mit einer grünen, seidigglänzenden Nuance mit guten Echtheiten.

Beispiel 38

Verwendet man anstelle von C.I. Solvent Orange 60 den anthrachinoiden Farbstoff C.I. Dispersions Violett 31, verfährt sonst nach der in Beispiel 36 beschriebenen Art, so erhält man Pressplatten mit einer dunkelvioletten, seidigglänzenden Nuance mit ausgezeichneten Echtheiten.

Beispiel 39

Verwendet man anstelle von C.I. Solvent Orange 60 den fluoreszierenden Thioxanthenfarbstoff C.I. Solvent Orange 63 und anstelle von 0,25 Teilen nur 0,05 Teile Graphite, verfährt sonst nach der in Beispiel 36 beschriebenen Art, so erhält man Presslinge mit einer leuchtend seidigglänzenden, orangefarbigen Nuance.

Beispiel 40

Verwendet man anstelle von C.I. Solvent Orange 63 den fluoreszierenden Cumarin-Farbstoff C.I. Solvent Gelb 160, verfährt sonst nach der in Beispiel 39 beschriebenen Art, so erhält man Presslinge mit einer leuchtend grünlichen, seidigglänzenden Nuance.

Beispiel 41

Verwendet man anstelle von 0,05 Teilen C.I. Solvent Orange 63 0,03 Teile fluoreszierenden Thioindigofarbstoff, verfährt sonst nach der in Beispiel 39 beschriebenen Art, so erhält man Presslinge mit einer leuchtend violetten, seidigglänzenden Nuance.

Beispiel 42

Verfährt man auf analoge Art wie in Beispiel 12 beschrieben, verwendet aber anstelle des nach Beispiel 9a behandelten LONZA-Graphits 100 %-igen LONZA-Graphit vom Typ KS 2.5, so erhält man eine violette Folie mit ähnlichen Eigenschaften.

Beispiel 43

Verfährt man auf analoge Art wie in Beispiel 18 beschrieben, verwendet aber anstelle des nach Beispiel 15a behandelten LONZA-Graphits 100 %igen LONZA-Graphit vom Typ KS 2.5, so erhält man eine violett gefärbte Folie mit ähnlichen Eigenschaften.

Beispiel 44

Verfährt man auf analoge Art wie in Beispiel 24 beschrieben, verwendet aber anstelle des nach Beispiel 15a behandelten LONZA-Graphits 100 %-igen LONZA-Graphit vom Typ KS 2.5, so erhält man eine grüngefärbte Folie mit ähnlichen Eigenschaften.

**Patentansprüche**

1. Stoffzusammensetzung enthaltend zu Formteilen verarbeitbares hochmolekulares organisches Material, 0,001 bis 3,0 Gew.-% Graphit bezogen auf das hochmolekulare organische Material und ein oder mehrere Pigmente oder polymerlösliche Farbstoffe.

2. Stoffzusammensetzung gemäss Anspruch 1, worin das hochmolekulare organische Material thermoplastisch ist.

3. Stoffzusammensetzung gemäss Anspruch 1, worin das hochmolekulare organische Material Polyvinylchlorid, Polyäthylen, Polypropylen, Polystyrol, Polycarbonat, Polyacrylsäureester, Polyamid, linearer Polyester, Polyäther, lineares Polyurethan oder deren Copolymere ist.

4. Stoffzusammensetzung gemäss Anspruch 1, worin der Graphit einen Kohlenstoffgehalt von mindestens 99 % hat.

5. Stoffzusammensetzung gemäss Anspruch 1, worin der Graphit in Schuppen- oder Plättchenform mit einem Durchmesser von bis zu 20 µm und einer Dicke von bis zu 4 µm vorliegt.

6. Stoffzusammensetzung gemäss Anspruch 1, worin die Graphitmenge 0,01 bis 1,0 Gew.-% bezogen auf das hochmolekulare organische Material beträgt.

7. Stoffzusammensetzung gemäss Anspruch 1, worin das Pigment ein organisches Pigment ist.

8. Stoffzusammensetzung gemäss Anspruch 1, worin das Pigment ein transparentes organisches Pigment ist.

9. Stoffzusammensetzung gemäss Anspruch 1, worin der Farbstoff ein Anthrachinonfarbstoff oder ein Metallkomplex eines Azofarbstoffes ist.

10. Stoffzusammensetzung gemäss Anspruch 1, worin Pigment oder Farbstoff in einer Menge von 0,001 bis 10,0 Gew.-% bezogen auf das hochmolekulare organische Material vorliegt.

11. Stoffzusammensetzung gemäss Anspruch 1, worin mit Stearinsäure, Stearylamin, hydrierter Abietinsäure, epoxidiertem Sojabohnenöl oder einem 1,2-Diol behandelter Graphit vorliegt.

12. Verwendung der Stoffzusammensetzung gemäss Anspruch 1 für die Herstellung von Formteilen.

**Claims**

1. A composition of matter containing high molecular weight organic material which can be processed into moulded products, 0.001 to 3.0 % by weight of graphite, relative to the high molecular weight organic material, and one or more pigments or polymer-soluble dyes.

2. A composition of matter according to claim 1, wherein the high molecular weight organic material is thermoplastic.

3. A composition of matter according to claim 1, wherein the high molecular weight organic material is polyvinyl chloride, polyethylene, polypropylene, polystyrene, polycarbonate, polyacrylate, polyamide, linear polyester, polyether, linear polyurethane, or copolymers thereof.

4. A composition of matter according to claim 1, wherein the graphite has a carbon content of at least 99 %.

5. A composition of matter according to claim 1, wherein the graphite is present in the form of flakes or platelets having a diameter of up to 20 µm and a thickness of up to 4 µm.

6. A composition of matter according to claim 1, wherein the amount of graphite is 0.01 to 1.0 % by weight, relative to the high molecular weight organic material.

7. A composition of matter according to claim 1, wherein the pigment is an organic pigment.

8. A composition of matter according to claim 1, wherein the pigment is a transparent organic pigment.

9. A composition of matter according to claim 1, wherein the dye is an anthraquinone dye or a metal complex of an azo dye.

10. A composition of matter according to claim 1, wherein pigment or dye is present in an amount of 0.001 to 10.0 % by weight, relative to the high molecular weight organic material.

11. A composition of matter according to claim 1, wherein graphite treated with stearic acid, stearylamine, hydrogenated abietic acid, epoxidised soyabean oil or a 1,2-diol is present.

12. Use of a composition of matter according to claim 1 for producing moulded products.

**Revendications**

1. Composition qui contient une matière organique macromoléculaire susceptible d'être transformée en objets moulés, de 0,001 à 3,0 % en poids de graphite par rapport à la matière organique macromoléculaire, et un ou plusieurs pigments ou un ou plusieurs colorants solubles dans les polymères.

2. Composition selon la revendication 1, composition dans laquelle la matière organique macromoléculaire est une matière thermoplastique.

3. Composition selon la revendication 1, composition dans laquelle la matière organique macromoléculaire est le poly-(chlorure de vinyle), le polyéthylène, le polypropylène, le polystyrène, un polycarbonate, un poly-(ester acrylique), un polyamide, un polyester linéaire, un polyéther, un polyuréthanne linéaire ou un copolymère de ceux-ci.

4. Composition selon la revendication 1, dans laquelle le graphite a une teneur en carbone d'au moins 99 %.

5. Composition selon la revendication 1, dans laquelle le graphite se trouve sous la forme d'écailles ou de paillettes d'un diamètre pouvant aller jusqu'à 20 µm et d'une épaisseur pouvant aller jusqu'à 4 µm.

6. Composition selon la revendication 1, dans laquelle la quantité de graphite est comprise entre 0,01 et 1,0 % en poids par rapport à la matière organique macromoléculaire.

7. Composition selon la revendication 1, dans laquelle le pigment est un pigment organique.

8. Composition selon la revendication 1, dans laquelle le pigment est un pigment organique transparent.

9. Composition selon la revendication 1, dans laquelle le colorant est un colorant anthraquinonique ou un complexe métallique d'un colorant azoïque.

10. Composition selon la revendication 1, dans laquelle le pigment ou le colorant se trouve en une quantité de 0,001 à 10,0 % en poids par rapport à la matière organique macromoléculaire.

11. Composition selon la revendication 1, dans laquelle il y a un graphite qui a été traité par l'acide stéarique, la stéarylamine, l'acide abiétique hydrogéné, l'huile de soja époxydée ou un diol-1,2.

12. Application de la composition selon la revendication 1 à la fabrication d'objets moulés.